# FASCICULE DE BREVET EUROPEEN

(11) **EP 4 375 766 B1**
(45) Date de publication et mention de la délivrance du brevet: **15.04.2026**
(21) Numéro de dépôt: 22209441.9
(22) Date de dépôt: 24.11.2022
(51) Int. Cl.: G04D 1/06, G04D 7/12, G04D 7/00

(54) **SUPPORT DE MESURE POUR MOUVEMENT D'HORLOGERIE**
MESSTRÄGER FÜR UHRWERK
MEASURING SUPPORT FOR A CLOCK MOVEMENT

(43) Date de publication de la demande: 29.05.2024
(73) Titulaire: Omega SA, 2502 Bienne (CH)
(72) Inventeur: NICOLAS, Cédric, 2000 Neuchâtel (CH); CRISTONI, Romano, 2605 Sonceboz (CH)
(74) Mandataire: ICB SA

(56) Documents cités:
- CH-A- 169 093
- CH-A4- 1 310 169
- JP-U- S5 770 186
- US-A- 1 905 778

## Description

### Domaine technique de l'invention

L'invention concerne un support de mesure pour mouvement d'horlogerie, agencé pour constituer un appui inférieur d'une calotte comportant un mouvement d'horlogerie ou d'une tête de montre comportant un mouvement d'horlogerie, dans une position d'appui sous contrainte de ladite calotte ou de ladite tête de montre sur ledit support de mesure.

L'invention concerne le domaine du contrôle des mouvements d'horlogerie, en particulier du contrôle de marche et/ou d'amplitude des mouvements mécaniques.

### Arrière-plan technologique

Pour contrôler et mesurer la marche et/ou l'amplitude d'un mouvement d'horlogerie, il est connu d'effectuer un contrôle acoustique, pour capter le son émis par l'échappement d'un calibre (monté dans une calotte ou emboîté dans une tête de montre) afin de mesurer la marche et l'amplitude du mouvement.

Il existe de nombreuses possibilités pour mesurer les sons (vibrations) émises par un mouvement ou par une montre. Par exemple un microphone de contact, un microphone aérien, ou un système optique comme un vibromètre laser sont envisageables.

Le microphone aérien est trop sensible aux bruits environnants et même internes à l'appareil de mesure. Souvent en production horlogère les mouvements sont testés par lots multiples de dix unités: si dix mouvements fonctionnent en même temps, chaque micro ne doit entendre que le mouvement auquel il est dédié, et non les mouvements immédiatement voisin.

Le vibromètre laser est utilisé en laboratoire, mais est un système beaucoup trop cher, complexe et encombrant pour une application en production de série. Il est aussi très sensible aux vibrations et aux variations de l'environnement.

Une solution optique par émission de lumière, par exemple avec une LED, et analyse du signal en réflexion, est plus adaptée à l'intégration de mouvements dans des boîtes de traitement de lots complets, mais le signal en retour est très faible, pratiquement imperceptible, et encore une fois difficile à isoler du bruit ambiant. De plus cette solution est trop consommatrice en énergie pour un système portable tel qu'une boîte porteuse des mouvements et des capteurs associés.

Aussi on utilise généralement pour effectuer de telles mesures un capteur constitué par un élément piézo utilisé en tant que microphone de contact. Les piézos sont disponible en différents types et géométries. Typiquement il existe des piézos sous forme de barreau ou de disque. Et des types simple ou bimorphe (deux piézos superposés). Les barreaux bimorphes sont à priori beaucoup plus sensibles mais plus complexes à contacter et surtout beaucoup plus chers.

Mais, même avec un capteur piézo, si un tel contrôle ne pose pas de difficultés sur un banc statique, il est plus délicat à effectuer sur un objet en mouvement, par exemple sur une calotte ou sur une tête de montre montée dans une boîte et manipulée par un robot ou similaire, ou sur une ligne de fabrication ou de contrôle.

En effet, le piézo est un élément fragile. Venir y appuyer directement l'objet dont on souhaite capter le son pourrait l'endommager. Il faut autant que possible éviter de le soumettre à des contraintes mécaniques.

Il faut donc un élément mécanique qui serve d'interface entre le piézo et le mouvement, et qui permette aussi de tenir en position le piézo dans l'appareil de mesure.

Il faut aussi pouvoir assurer que seul le son provenant du mouvement d'horlogerie soit mesuré par le piézo, et il faut donc isoler autant que possible ce capteur des perturbations externes, notamment des perturbations acoustiques provenant d'autres mouvements en cours de tests à proximité.

Le document CH 169 093 A décrit un chrono comparateur où les impulsions de chaque pièce d'horlogerie sont mesurées par deux microphones isolés : pour éviter tout couplage acoustique entre les microphones, chacun est enfermé dans un boîtier insonorisant et la pièce d'horlogerie testée est montée sur une plaque montée sur des supports isolateurs.

### Résumé de l'invention

L'invention se propose d'apporter une solution économique au problème de la tenue d'un capteur piézo pour un contrôle de marche et/ou d'amplitude, notamment embarqué dans une boîte ou tout autre support mobile dans l'espace, et une solution permettant d'atteindre une moindre sensibilité au bruit ambiant que les systèmes actuels.

A cet effet, l'invention concerne un support de mesure selon la revendication 1.

### Brève description des figures

Les buts, avantages et caractéristiques de l'invention seront mieux compris à la lecture de la description détaillée qui va suivre, en référence aux dessins annexés, où :

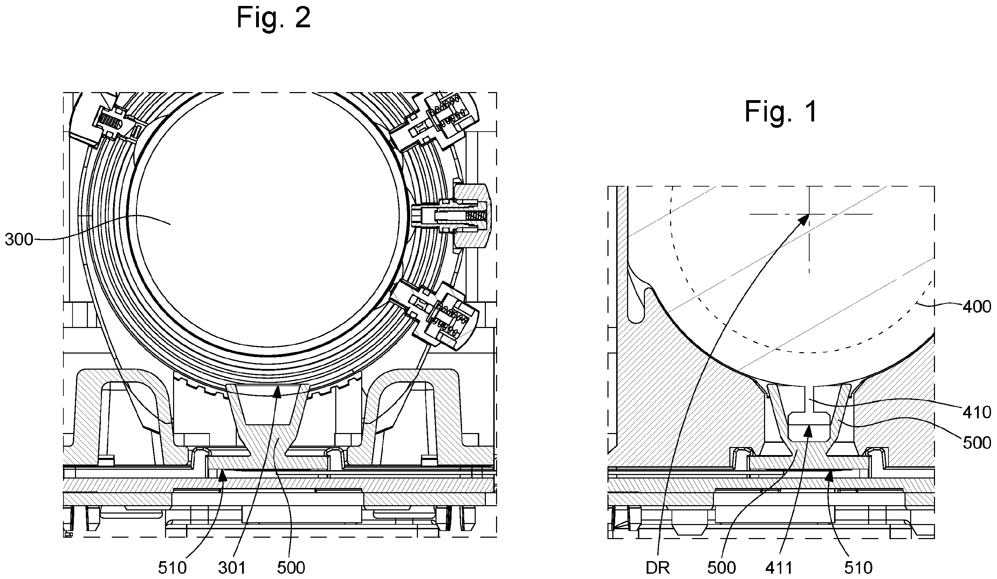

- la figure 1 représente de façon schématisée, partielle et en coupe, une calotte munie d'un mouvement d'horlogerie, dans une position de contrôle qui est une position d'appui sous contrainte de cette calotte sur un support de mesure selon l'invention;
- la figure 2 représente de façon similaire à la figure 1, une tête de montre renfermant un mouvement d'horlogerie, dans une position de contrôle qui est une position d'appui sous contrainte de cette tête de montre sur le même support de mesure que celui de la figure 1;

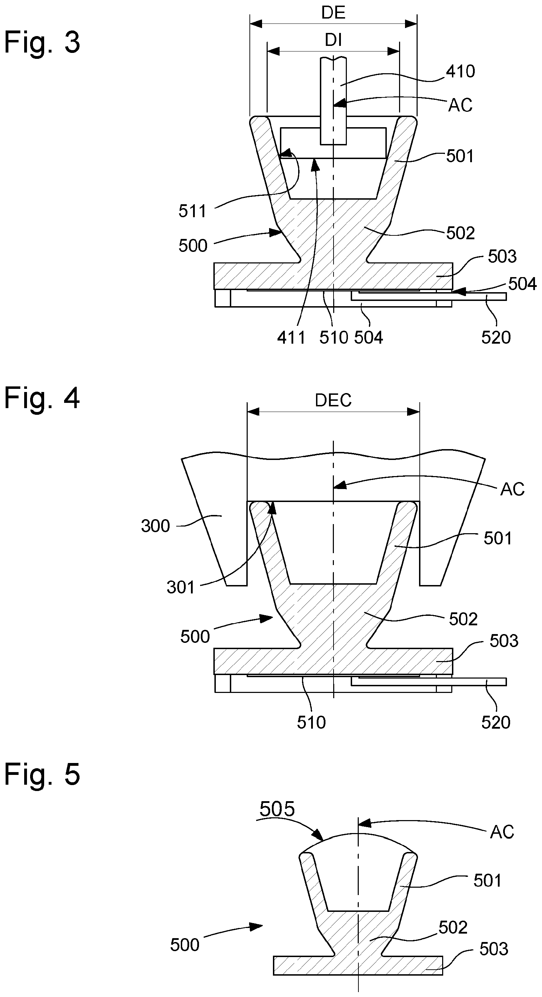

- la figure 3 représente de façon schématisée, en section transversale par un axe de révolution, une variante particulière et non limitative de support de mesure selon l'invention, comportant un pavillon en forme de cloche renversée, dont le côté le plus évasé est tourné vers l'objet à mesurer, ici une calotte renfermant un mouvement, dont la couronne d'extrémité de la tige de commande est en contact, selon une zone d'appui sensiblement tronconique, avec la partie intérieure de ce pavillon, qui est dans cette réalisation particulière non limitative sensiblement conique. Ce pavillon guide les vibrations vers une partie plus massive faisant concentrateur, solidaire d'un socle sous lequel est maintenu fixé un capteur, ici un capteur piézo dans cet exemple particulier. Ce socle comporte une fente pour recevoir le câble de liaison du capteur avec un module électronique;
- la figure 4 représente de façon schématisée, en section transversale par un axe de révolution, du même support de mesure que sur la figure 3, qui est ici en appui sur une zone de mesure d'une tête de montre, plus particulièrement entre deux cornes voisines de cette tête de montre, selon une zone d'appui sensiblement annulaire;
- la figure 5 représente, de façon schématisée et en section transversale, un autre support de mesure qui n'est à symétrie de révolution, mais à symétrie plane par rapport au plan de coupe, et qui comporte une extrémité supérieure arrondie pour un contact plus ponctuel.

### Description détaillée de l'invention

Pour apporter une solution efficace à la protection du capteur, l'invention propose de fixer le capteur sur un support de mesure, lequel supporte l'effort mécanique lors de l'appui sur l'élément à contrôler.

Un simple disque piézo produit en grande quantité et bien connu dans l'industrie horlogère (utilisé en tant que buzzer) donne des résultats tout à fait satisfaisants, il est donc utilisable pour une application industrielle. En particulier l'invention s'intéresse à la configuration industrielle dans laquelle des mouvements emboîtés dans des calottes ou montés dans des têtes de montres sont rangés par lots dans des boîtes de transport sur des lignes de fabrication ou de contrôle. De telles boîtes circulent selon des cycles assez longs, de plusieurs jours ou semaines, selon la nature et la fréquence des opérations à effectuer, en particulier pour des opérations de contrôle chronométriques; il s'agit donc de disposer de supports de mesure bon marché, puisqu'ils restent immobilisés sur ces boîtes, et supportant les manipulations sur des convoyeurs, dans des transtockeurs, ou autres moyens de manutention.

La captation du son se faisant par contact, là aussi différentes options existent. Le point de contact entre le capteur et l'objet à mesurer peut varier.

Idéalement le contact doit être le plus direct et rigide possible avec la source qui génère le son. Dans le cas d'un mouvement d'horlogerie, la tige de commande est un élément approprié, et est le seul élément valable pour des mouvements montés en calotte. Pour des mouvements emboîtés dans une tête de montre, il est aussi possible d'obtenir un contact via la boîte, le fond ou la carrure par exemple. Un contact avec la glace n'est pas toujours favorable, en raison des joints d'étanchéité qui amortissent la vibration.

Dans le cas de calottes ou de têtes de montres groupées par lots multiples de 10 dans une boîte de traitement, il faut prévoir des capteurs capables de mesurer cette ou ces dizaines de mouvements (en calotte ou emboîtés), à raison d'un capteur par mouvement, insérés dans une boite de dimensions données.

Une difficulté est de pouvoir venir en contact avec le plus grand nombre de types de montre dont la géométrie est variable. Les dimensions de la boîte imposent de positionner les montres en alignement. Il n'est pas garanti que la tige de commande soit accessible, ni même toujours dans la même position. Pour les mouvements emboîtés, un contrôle réalisé au niveau de l'entre-cornes donne de bons résultats; de plus cette zone permet de tolérer une petite trace ou un matage local sans nuire à l'esthétique de la boîte de montre. Il est de ce fait avantageux d'agencer le capteur pour avoir un contact sur la carrure à l'entre-cornes pour les montres, et sur la tige de commande pour les mouvements en calotte.

Pour que la tête de montre et la calotte puissent être positionnés dans les mêmes logements d'une boîte de transport, cela impose des zones de contact avec le capteur à deux positions différentes.

Aussi l'invention concerne un support de mesure 500 pour mouvement d'horlogerie, qui est agencé pour constituer un appui inférieur d'une calotte 200 comportant un mouvement d'horlogerie 400 ou d'une tête de montre 300 comportant un mouvement d'horlogerie 400, dans une position d'appui sous contrainte de la calotte 200 ou de la tête de montre 300 sur le support de mesure 500. Par exemple, cette calotte 200 ou cette tête de montre 300 est poussée vers le support de mesure 500, et maintenue en appui sur le support de mesure 500 par des moyens de compression poussant cette calotte 200 ou sur cette tête de montre 300 du côté opposé au côté d'appui sur le support de mesure 500, notamment par au moins un élément résilient 80 qui est en appui contraint sur cette calotte 200 ou sur cette tête de montre 300 du côté opposé au côté d'appui sur le support de mesure 500.

Dans une réalisation préférée de l'invention, ce support de mesure 500 comporte un pavillon 501 en forme de cloche renversée, avec un profil intérieur conique ou évolutif, dont le côté le plus évasé est tourné vers la calotte 200 ou la tête de montre 300 à contrôler. Ce pavillon 501 guide les vibrations vers une partie plus massive faisant concentrateur 502, qui est solidaire d'un socle 503 sous ou sur lequel est maintenu un capteur de mesure 510 agencé pour écouter la marche et/ou l'amplitude d'un mouvement d'horlogerie 400 renfermé dans une calotte 200 ou une tête de montre 300, dans la position d'appui sous contrainte de cette calotte 200 ou de cette tête de montre 300 sur le support de mesure 500.

Plus particulièrement, ce capteur de mesure 510 est un capteur piézo.

Pour assurer une bonne transmission du son du mouvement 400 jusqu'au capteur piézo 510, il faut minimiser le nombre d'interfaces, et avoir le meilleur contact possible à chaque interface. La liaison piézo-cloche doit donc être rigide, et cela se fait facilement en collant le piézo sur toute sa surface dans ou sur le support de mesure 500, notamment avec une colle rigide type cyanocrylate p.ex. Plus particulièrement, ce capteur de mesure 510 est collé sur toute sa surface de contact avec le socle 503 avec une colle cyanocrylate.

Plus particulièrement, le socle 503 comporte une fente 504 pour recevoir un câble de liaison 520 pour la liaison du capteur de mesure 510 avec un module électronique 51.

Plus particulièrement, la partie intérieure du pavillon 501 est sensiblement conique.

Plus particulièrement, tel que visible sur la figure 3, le pavillon 501 présente, à son côté le plus ouvert, un diamètre extérieur DE, inférieur aux entre-cornes DEC des boîtes de montre 300 à mesurer, et un diamètre intérieur DI supérieur au diamètre des couronnes des mouvements 400 enfermés dans les calottes 200 à mesurer, ces couronnes venant en contact avec la surface d'appui intérieure 511 du pavillon 501. Cette géométrie répond bien aux contraintes d'encombrement, et rend le support de mesure 500 très polyvalent.

Plus particulièrement, le support de mesure 500 est en matériau dur ou est métallique. En effet, une cloche en matériau dur assure une bonne transmission. Les essais montrent notamment de très bons résultats avec une cloche en alliage d'aluminium.

Plus particulièrement, le support de mesure 500 est en alliage d'aluminium.

Plus particulièrement, le support de mesure 500 est en bronze ou en cupro-aluminium.

Le fait de fixer le capteur piézo 510 sur une pièce rigide comme la cloche du support de mesure 500 a pour effet une élévation de la fréquence de résonance de l'ensemble du système capteur (piézo + cloche) par rapport à celle du piézo seul. Cela permet de décaler fortement cette fréquence de résonance en dehors de la plage des fréquences mesurées afin d'éviter des comportements chaotiques. Plus particulièrement, le support de mesure 500 est lesté avec une masse inertielle.

Plus particulièrement, et tel que visible sur les figures 3 et 4, le pavillon 501 est à symétrie de révolution par rapport à un axe de pavillon AC.

Plus particulièrement, tel que visible sur la figure 5, le pavillon 501 n'est pas à symétrie de révolution, mais peut être à symétrie plane, ou autre, sur cette figure 5 l'extrémité 505 du pavillon 501 tournée vers la calotte 200 ou la tête de montre 300 à mesurer comporte au moins une surface de contact qui est localement sensiblement sphérique ou cylindrique.

Plus particulièrement, le socle 503 est entouré par une semelle en matériau souple et résilient, de préférence amovible, notamment par clipage, et qui comporte ses seuls moyens de fixation à une structure externe: le socle 503, et donc le support de mesure 500, peut être suspendu tout en restant en appui sous contrainte avec la calotte 200 ou la tête de montre 300.

La figure 3 montre le contact entre l'extrémité distale 411 de l'organe de commande 410 dans le cas d'une calotte 200, en appui sur une surface d'appui interne 511 du pavillon 501 du support de mesure 500.

La figure 4 montre le contact entre une zone d'appui 301, ici par exemple entre les cornes d'une tête de montre 300, et l'extrémité du pavillon 501 du support de mesure 500.

Au niveau du socle 503, une gorge 504 permet le passage d'un câble 520 ou similaire relié à un module électronique ou similaire. Le socle 503 est de préférence l'élément de fixation à une structure externe, notamment au travers d'une gorge d'une semelle en matériau souple et résilient, et coincé par un bourrelet qui assure son maintien.

La géométrie de la cloche constituant le pavillon 501 doit diriger le son vers le centre du capteur piézo 510. Un contact ponctuel au centre serait probablement idéal. Mais de manière réaliste, la forme en cône inversé est favorable. On pourrait un peu comparer le fonctionnement à celui d'un tambour pour lequel il est clair que le son est bien meilleur et puissant lorsque l'on frappe au centre de la membrane plutôt que sur les bords.

La géométrie en forme de cloche ou de cône inversé résout deux problèmes:
- en apportant la possibilité d'établir un contact entre le capteur 501 et des têtes de montres 300 sur la carrure, ou des mouvements 400 en calotte 200 sur la tige 410, dans le même encombrement;
- en améliorant l'efficacité de la captation du son grâce à la forme qui conduit et concentre les vibrations vers le centre du capteur.

Le support de mesure particulier mis en œuvre par l'invention offre, outre l'avantage d'une mesure de qualité, beaucoup plus fiable qu'un palpage sur une glace ou un fond de boîte de montre, une polyvalence appréciable puisqu'il convient à la fois aux calottes et aux têtes de montre; dans ce dernier cas, l'appui entre cornes est avantageux, et permet de ne pas toucher des surfaces d'aspect de la tête de montre. En somme, l'invention apporte une solution économique au problème de la tenue d'un capteur, notamment un capteur piézo, pour un contrôle de marche et/ou d'amplitude, et qui permet de mieux s'affranchir de la pollution sonore du bruit ambiant que les systèmes actuels.

## Revendications

1. Support de mesure (500) pour mouvement d'horlogerie, agencé pour constituer un appui inférieur d'une calotte (200) comportant un mouvement d'horlogerie (400) ou d'une tête de montre (300) comportant un mouvement d'horlogerie (400), dans une position d'appui sous contrainte de ladite calotte (200) ou de ladite tête de montre (300) sur ledit support de mesure (500), **caractérisé en ce que** ledit support de mesure (500) comporte un pavillon (501) en forme de cloche renversée, dont le côté le plus évasé est tourné vers ladite calotte (200) ou ladite tête de montre (300) à contrôler, lequel pavillon (501) est agencé pour guider les vibrations vers une partie plus massive faisant concentrateur (502), solidaire d'un socle (503) sous lequel est maintenu un capteur de mesure (510) agencé pour écouter la marche et/ou l'amplitude d'un dit mouvement d'horlogerie (400) renfermé dans ladite calotte (200) ou ladite tête de montre (300), dans la position où ledit support de mesure (500) est en appui sous contrainte avec ladite calotte (200) ou ladite tête de montre (300), **caractérisé en ce que** ledit concentrateur (502) présente une forme générale tronconique dont la partie de plus faible dimension est solidaire dudit socle (503).

2. Support de mesure (500) selon la revendication 1, **caractérisé en ce que** ledit capteur de mesure (510) est un capteur piézo.

3. Support de mesure (500) selon la revendication 1 ou 2, **caractérisé en ce que** ledit capteur de mesure (510) est collé sur toute sa surface de contact avec ledit socle (503) avec une colle cyanocrylate.

4. Support de mesure (500) selon l'une des revendications 1 à 3, **caractérisé en ce que** ledit socle (503) comporte une fente (504) pour recevoir un câble de liaison (520) pour la liaison dudit capteur de mesure (510) avec un module électronique (51).

5. Support de mesure (500) selon l'une des revendications 1 à 4, **caractérisé en ce que** la partie intérieure dudit pavillon (501) est sensiblement conique.

6. Support de mesure (500) selon l'une des revendications 1 à 5, **caractérisé en ce que** ledit pavillon (501) présente, à son côté le plus ouvert, un diamètre extérieur (DE), inférieur aux entre-cornes des boîtes de montre (300) à mesurer, et un diamètre intérieur (DI) supérieur au diamètre des couronnes des mouvements (400) enfermés dans les calottes (200) à mesurer, lesdites couronnes venant en contact avec une surface d'appui intérieure (511) dudit pavillon (501).

7. Support de mesure (500) selon l'une des revendications 1 à 6, **caractérisé en ce que** ledit support de mesure (500) est en matériau dur ou est métallique.

8. Support de mesure (500) selon la revendication 7, **caractérisé en ce que** ledit support de mesure (500) est en alliage d'aluminium.

9. Support de mesure (500) selon la revendication 7, **caractérisé en ce que** ledit support de mesure (500) est en bronze ou en cupro-aluminium.

10. Support de mesure (500) selon l'une des revendications 1 à 9, **caractérisé en ce que** ledit support de mesure (500) est lesté avec une masse inertielle.

11. Support de mesure (500) selon l'une des revendications 1 à 10, **caractérisé en ce que** ledit pavillon (501) est à symétrie de révolution par rapport à un axe de pavillon (AC).

12. Support de mesure (500) selon l'une des revendications 1 à 10, **caractérisé en ce que** l'extrémité (505) dudit pavillon (501) tournée vers ladite calotte (200) ou ladite tête de montre (300) à mesurer comporte au moins une surface de contact qui est localement sensiblement sphérique ou cylindrique.

13. Support de mesure (500) selon l'une des revendications 1 à 12, **caractérisé en ce que** ledit socle (503) est entouré par une semelle en matériau souple et résilient comportant ses seuls moyens de fixation à une structure externe.

## Patentansprüche

1. Messvorrichtung (500) für ein Uhrwerk, ausgelegt, eine untere Stütze für eine Kalotte (200), die ein Uhrwerk (400) umfasst, oder einen Uhrkopf (300), der ein Uhrwerk (400) umfasst, bereitzustellen, in einer Position, in der die Kalotte (200) oder der Uhrkopf (300) gegen die Messvorrichtung (500) in Position gehalten wird, **dadurch gekennzeichnet, dass** die Messvorrichtung (500) einen Pavillon (501) in Form einer umgekehrten Glocke umfasst, dessen aufgeweitete Seite der zu messenden Kalotte (200) oder dem zu messenden Uhrkopf (300) zugewandt ist, wobei der Pavillon (501) dazu ausgebildet ist, Schwingungen zu einem massiveren Teil zu führen, der als Konzentrator (502) wirkt und an einer Basis (503) befestigt ist, unter der ein Messsensor (510) gehalten ist, der dazu bestimmt ist, den Gang und/oder die Amplitude eines in der Kalotte (200) oder dem Uhrkopf (300) eingeschlossenen Uhrwerks (400) zu erfassen, in der Position, in der die Messvorrichtung (500) gegen die Kalotte (200) oder den Uhrkopf (300) gehalten wird, wobei der Konzentrator (502) im Wesentlichen kegelstumpfförmig ausgebildet ist, dessen kleinerer Teil an der Basis (503) befestigt ist.

2. Messvorrichtung (500) nach Anspruch 1, **dadurch gekennzeichnet, dass** der Messsensor (510) ein piezoelektrischer Messsensor ist.

3. Messvorrichtung (500) nach Anspruch 1 oder 2, **dadurch gekennzeichnet, dass** der Messsensor (510) über seine gesamte Kontaktfläche mit einem Cyanoacrylat-Klebstoff auf die Basis (503) geklebt ist.

4. Messvorrichtung (500) nach einem der Ansprüche 1 bis 3, **dadurch gekennzeichnet, dass** die Basis (503) einen Schlitz (504) zum Halten eines Verbindungskabels (520) zum Verbinden des Messsensors (510) mit einem elektronischen Modul (51) umfasst.

5. Messvorrichtung (500) nach einem der Ansprüche 1 bis 4, **dadurch gekennzeichnet, dass** der innere Teil des Pavillons (501) im Wesentlichen konisch ist.

6. Messvorrichtung (500) nach einem der Ansprüche 1 bis 5, **dadurch gekennzeichnet, dass** der Pavillon (501) an seiner offenen Seite einen Außendurchmesser (DE) aufweist, der kleiner ist als die Anstoßbreite der zu messenden Uhrköpfe (300), und einen Innendurchmesser (DI) aufweist, der größer ist als der Durchmesser der Kronen der in den zu messenden Kalotten (200) eingeschlossenen Uhrwerke (400), wobei die Kronen an einer inneren Auflagefläche (511) des Pavillons (501) anliegen.

7. Messvorrichtung (500) nach einem der Ansprüche 1 bis 6, **dadurch gekennzeichnet, dass** die Messvorrichtung (500) aus hartem Material oder aus Metall besteht.

8. Messvorrichtung (500) nach Anspruch 7, **dadurch gekennzeichnet, dass** die Messvorrichtung (500) aus einer Aluminiumlegierung besteht.

9. Messvorrichtung (500) nach Anspruch 7, **dadurch gekennzeichnet, dass** die Messvorrichtung (500) aus Bronze oder aus einer Kupfer-Aluminium-Legierung besteht.

10. Messvorrichtung (500) nach einem der Ansprüche 1 bis 9, **dadurch gekennzeichnet, dass** die Messvorrichtung (500) mit einer Trägheitsmasse beschwert ist.

11. Messvorrichtung (500) nach einem der Ansprüche 1 bis 10, **dadurch gekennzeichnet, dass** der Pavillon (501) um eine Pavillonachse (AC) rotationssymmetrisch ist.

12. Messvorrichtung (500) nach einem der Ansprüche 1 bis 10, **dadurch gekennzeichnet, dass** das der zu messenden Kalotte (200) oder dem zu messenden Uhrkopf (300) zugewandte Ende (505) des Pavillons (501) mindestens eine lokal im Wesentlichen kugelförmige oder zylindrische Kontaktfläche aufweist.

13. Messvorrichtung (500) nach einem der Ansprüche 1 bis 12, **dadurch gekennzeichnet, dass** die Basis (503) von einer Sohle aus flexiblem, elastischem Material umgeben ist, wobei die Sohle das einzige Befestigungsmittel der Messvorrichtung an einer äußeren Struktur bildet.

## Claims

1. A measuring jig (500) for a horological movement, designed to provide a lower support for a calotte (200) comprising a horological movement (400) or a watch head (300) comprising a horological movement (400), in a position in which said calotte (200) or said watch head (300) is held in place against said measuring jig (500), **characterised in that** said measuring jig (500) comprises a pavilion (501) in the shape of a reverse bell, the flared side of which is facing said calotte (200) or said watch head (300) to be controlled, this pavilion (501) being designed to guide vibrations towards a more massive part acting as a concentrator (502), attached to a base (503) under which is held a measurement sensor (510) designed to listen to the rate and/or amplitude of a said horological movement (400) enclosed in said calotte (200) or said watch head (300), in the position in which said measuring jig (500) is held against said calotte (200) or said watch head (300), **characterised in that** said concentrator (502) has a generally truncated conical shape, the smaller part of which is attached to said base (503).

2. The measuring jig (500) according to claim 1, **characterised in that** said measurement sensor (510) is a piezo sensor.

3. The measuring jig (500) according to claim 1 or 2, **characterised in that** said measurement sensor (510) is glued over its entire contact surface to said base (503) with a cyanoacrylate glue.

4. The measuring jig (500) according to any of claims 1 to 3, **characterised in that** said base (503) comprises a slot (504) for holding a connecting cable (520) for connecting said measurement sensor (510) to an electronic module (51).

5. The measuring jig (500) according to any of claims 1 to 4, **characterised in that** the inner part of said pavilion (501) is substantially conical.

6. The measuring jig (500) according to any of claims 1 to 5, **characterised in that** said pavilion (501) has, at its most open side, an outer diameter (DE) that is less than the lug width of the watchcases (300) to be measured, and an inner diameter (DI) that is greater than the diameter of the crowns of the movements (400) enclosed in the calottes (200) to be measured, said crowns contacting an inner support surface (511) of said pavilion (501).

7. The measuring jig (500) according to any of claims 1 to 6, **characterised in that** said measuring jig (500) is made of hard material or is metallic.

8. The measuring jig (500) according to claim 7, **characterised in that** said measuring jig (500) is made of aluminium alloy.

9. The measuring jig (500) according to claim 7, **characterised in that** said measuring jig (500) is made of bronze or of cupro-aluminium.

10. The measuring jig (500) according to any of claims 1 to 9, **characterised in that** said measuring jig (500) is weighted with an inertial mass.

11. The measuring jig (500) according to any of claims 1 to 10, **characterised in that** said pavilion (501) is rotationally symmetric about a pavilion axis (AC).

12. The measuring jig (500) according to any of claims 1 to 10, **characterised in that** the end (505) of said pavilion (501) facing said calotte (200) or said watch head (300) to be measured comprises at least one contact surface that is locally substantially spherical or cylindrical.

13. The measuring jig (500) according to any of claims 1 to 12, **characterised in that** said base (503) is surrounded by a sole made of flexible, resilient material comprising its only means of attachment to an external structure.
